# EUROPEAN PATENT APPLICATION

(11) **EP 2 919 153 A1**
(43) Date of publication of application: **16.09.2015**
(21) Application number: 15153028.4
(22) Date of filing: 29.01.2015
(51) Int. Cl.: G06K 9/00, G06K 9/62

(54) **Event detection apparatus and event detection method**

(30) Priority: 14.03.2014 JP 2014051652
(71) Applicant: OMRON CORPORATION, Kyoto-shi, Kyoto 600-8530 (JP)
(72) Inventor: Ruan, Xiang, Kyoto-shi, Kyoto 600-8530 (JP); Lu, Huchuan, 116023 Dalian-City (CN); Zhang, Ying, 116023 Dalian-City (CN)
(74) Representative: Kilian Kilian & Partner

(57) **Abstract**

An event detection apparatus determines the occurrence of an abnormal event based on input data without predefining and learning normal or abnormal patterns. A first data obtaining unit obtains first data. A feature quantity classifying unit obtains a feature quantity corresponding to the first data, generates a plurality of clusters for classifying the obtained feature quantity, and classifies the feature quantity into a corresponding one of the clusters. A learning unit learns a plurality of identifiers using feature quantities classified into the clusters. A second data obtaining unit obtains second data. An identifier unit inputs a feature quantity corresponding to the second data into the plurality of learned identifiers, and receives an identification result from each identifier. A determination unit determines whether the second data includes an identification target event based on the obtained identification result.

## Description

### BACKGROUND OF THE INVENTION

### Field of the Invention

The present invention relates to an event detection apparatus that determines the occurrence of an abnormal event based on input data.

### Description of the Related Art

The recent growing interest in security has spread the use of monitoring cameras. A monitoring camera is installed to monitor certain abnormal circumferences. However, real-time monitoring of all the video data by humans is unrealistic. Methods currently under research are to automatically identify scenes including abnormal events (abnormal scenes) and scenes without such abnormal events (normal scenes) based on the circumstances captured in the video data. The abnormal events refer to events that cannot occur in normal circumstances. Examples of abnormal events include traffic accidents, falls from platforms, intrusions by suspicious intruders, and falling or fainting of care receivers.

One common method for detecting events included in video uses matching between information obtained from the video with events learned in advance.

For example, a suspicious-action detection system described in Patent Literature 1 learns the trajectories of a target person to be monitored either as normal patterns or as abnormal patterns, and compares obtained trajectories of the monitoring target person with the learned information to identify the action of the target person.

### CITATION LIST

### PATENT LITERATURE

Patent Literature 1: Japanese Unexamined Patent Application Publication No. 2012-128877

### SUMMARY OF THE INVENTION

The system described in Patent Literature 1 can detect an action deviating from normal patterns based on the trajectories of a person. However, this system determines such an abnormality based on the trajectories of a person moving within a predetermined space, and thus cannot determine the occurrence of events that are not based on the trajectories of a moving person. For example, whereas this system can detect a wandering aged person, the system fails to detect a forcibly opened cashbox from video captured by the monitoring camera.

This difficulty may seem to be overcome by obtaining the feature quantities for features other than the trajectories of a person and comparing between the feature quantities. However, identifying normal scenes and abnormal scenes using results from learning will need a sufficiently large number of data sets for learning the normal scenes and the abnormal scenes. An insufficient number of data sets prepared for learning would degrade the accuracy in identifying normal scenes and abnormal scenes.

In reality, events included in abnormal scenes are likely to be unfavorable events, such as accidents. Such abnormal events are often difficult to generate for learning.

Scenes collectively called normal or abnormal are actually a variety of scenes with different features. Assuming such scenes with different features collectively as normal scenes (or abnormal scenes) may degrade the recognition accuracy. For example, detecting a fall of a person from a platform can involve many normal scenes including scenes in which a train is arriving, a train is departing, a platform is with passengers, or a platform has no passengers. Defining these scenes individually can often be difficult.

To respond to the above difficulty, it is an object of the present invention to provide an event detection apparatus that determines the occurrence of an abnormal event based on input data without predefining and learning normal patterns and abnormal patterns.

To solve the above problem, a first aspect of the invention provides an event detection apparatus including a first data obtaining unit, a plurality of identifiers, an identifier unit, a feature quantity classifying unit, a learning unit, a second data obtaining unit, and a determination unit. The first data obtaining unit obtains first data. The feature quantity classifying unit obtains a feature quantity corresponding to the first data, generates a plurality of clusters for classifying the obtained feature quantity, and classifies the feature quantity into a corresponding one of the clusters. The learning unit learns the plurality of identifiers using feature quantities classified into the clusters. The second data obtaining unit obtains second data. The identifier unit inputs a feature quantity corresponding to the second data into the plurality of learned identifiers, and receives an identification result from each identifier. The determination unit determines whether the second data includes an identification target event based on the obtained identification result.

The first data is data for learning, and is typically image data. However, it should not be limited to image data. The first data may be any data that is expected to contain many normal events from experience. More specifically, the first data may not be data containing only normal events but may contain a few abnormal events. Data containing no abnormal event is to be used if such data is available.

The feature quantity classifying unit extracts feature quantities from the input first data, and classifies the obtained feature quantities into a plurality of clusters. The feature quantities may correspond to the entire data, or may correspond to a part of the data.

The learning unit uses the feature quantities classified into each cluster, and learns the identifier corresponding to each cluster. The identifier enables classification of the input information in accordance with a result of machine learning. The identifier may be, for example, a support vector machine (SVM).

The second data is input data for which the determination for an abnormal event is performed. The second data is typically image data. However, it should not be limited to image data. The identification unit inputs the feature quantity obtained from the second data into each of the learned identifiers, and receives an identification result from each identifier. This provides information indicating the degree of similarity between the input data and each cluster. The determination unit then determines whether the second data includes an identification target event based on the identification result. The feature quantity obtained from the input data deviating greatly from each cluster indicates a high likelihood that an event different from the event generated in the data used for learning has occurred. In this case, an abnormal event is determined to have occurred.

Each identifier is a one-class identifier. The determination unit obtains a sum of identification errors obtained from the plurality of identifiers as a score, and determines whether the second data includes the target event based on the score.

A one-class identifier is an identifier for calculating the degree of matching for one class. More specifically, when the feature quantity is input, a value indicating an error (identification error) for the corresponding cluster is output. It is preferable to use the sum of identification errors obtained from the identifiers in determining whether an abnormal event has occurred. A large sum of identification errors indicates a high likelihood that an event different from the event generated in the data used for learning has occurred.

The determination unit weights the identification errors obtained from the identifiers and obtains the score using the weighted identification errors.

When the feature quantities forming each cluster have large differences between them, the occurrence of an abnormal event may be determined incorrectly. Weighting the identification errors for each cluster and obtaining the score using the weighted values improves the determination accuracy.

The determination unit may weight the identification error output from each identifier using a greater weighting value for the identifier for which the corresponding cluster includes a larger number of samples. The determination unit may weight the error output from each identifier using a greater weighting value for the identifier for which the corresponding cluster includes samples having a smaller variance.

The weighting value for each cluster may be determined in accordance with the number of samples or the variance of the samples included in the cluster. When, for example, the cluster includes a smaller number of samples, the learning of the corresponding identifier may be insufficient. In this case, the weighting value for the identifier is preferably set smaller than when the number of samples is larger. When the variance of samples included in one cluster is small, the cluster is expected to represent a specific event of the cluster in an appropriate manner. The weighting value for the identifier is preferably set larger than when the variance is larger.

The first data and the second data may be image data.

The event detection apparatus of the aspect of the present invention is preferably used as an apparatus that determines whether an image includes an identification target event.

For the input data that is image data, a group of feature quantities may be obtained for each pixel of the image, or for an area of the image. Alternatively, the obtained feature quantity may correspond to the entire image, or may correspond to a part of the image.

The feature quantity may be a three-dimensional local binary pattern.

The local binary pattern (LBP) is a binary pattern expressing the relationship between a target pixel and pixels neighboring the target pixel. A 3D-LBP is a pattern obtained through temporal extension of an LBP. The 3D-LBP can be used preferably to express the feature quantity in detecting an event included in a moving image.

A second aspect of the invention provides an event detection apparatus that determines whether obtained data includes an identification target event. The event detection apparatus includes a data obtaining unit, a plurality of identifiers, an identifier unit, and a determination unit. The data obtaining unit obtains data. The identifier unit inputs a feature quantity corresponding to the obtained data into the plurality of identifiers, and receives an identification result from each identifier. The determination unit determines whether the obtained data includes an identification target event based on the obtained identification result. The identifiers may be identifiers learned in correspondence with a plurality of clusters using feature quantities obtained from data for learning and classified into the plurality of clusters.

As described above, the event detection apparatus of the second aspect of the invention can be regarded as the event detection apparatus of the first aspect from which the components for learning the identifiers are eliminated.

Aspects of the invention provide an event detection apparatus that includes at least some of the functional units described above. Aspects of the invention may provide an event detection method that is implemented by the above event detection apparatus or may provide a program enabling the above event detection apparatus to implement the above event detection method. The above processes and functional units may be freely combined with one another when no technological contradictions occur.

The event detection apparatus of the invention determines the occurrence of an abnormal event based on input data without predefining and learning normal and abnormal patterns.

### BRIEF DESCRIPTION OF THE DRAWINGS

Fig. 1 is a diagram showing the system configuration of an image processing apparatus according to an embodiment.
Fig. 2 is a diagram describing a method for calculating a feature quantity using an LBP.
Figs. 3A and 3B are diagrams describing a method for calculating a feature quantity using a 3D-LBP.
Fig. 4 is a diagram describing a process for learning identifiers.
Fig. 5 is a diagram describing a process for determining the occurrence of an abnormal event.
Fig. 6 is a flowchart showing a process for learning identifiers.
Fig. 7 is a flowchart showing a process for determining the occurrence of an abnormal event.

### DESCRIPTION OF THE EMBODIMENTS

### System Configuration

Embodiments of the present invention will now be described with reference to the drawings.

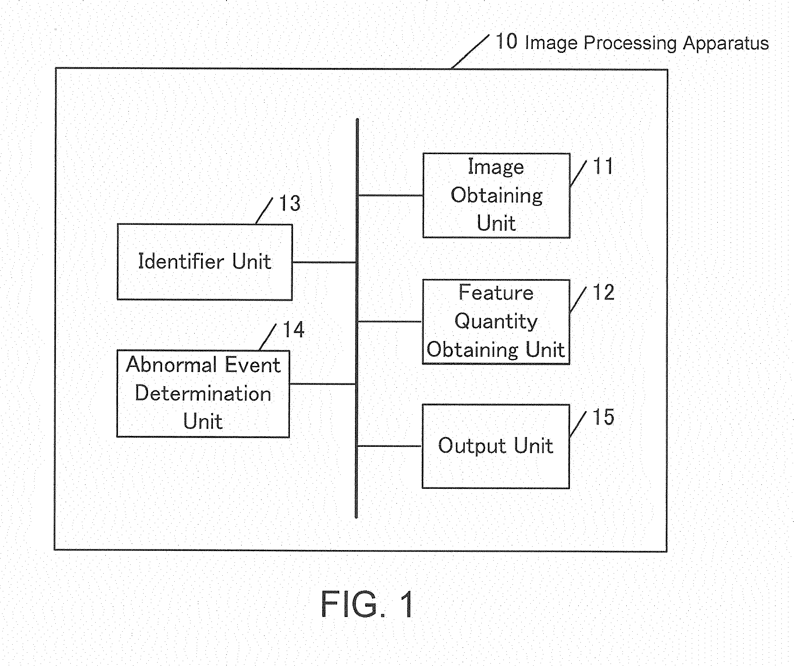

An image processing apparatus according to a first embodiment obtains a moving image captured with an imager such as a camera, and determines the occurrence of an abnormal event based on the obtained moving image. Fig. 1 shows the system configuration of an image processing apparatus 10 according to the present embodiment.

The image processing apparatus 10 includes an image obtaining unit 11, a feature quantity obtaining unit 12, an identifier unit 13, an abnormal event determination unit 14, and an output unit 15.

The image obtaining unit 11 obtains an image from a source external to the apparatus. The image obtaining unit 11 typically includes a digital camera or a digital video camera, and its interface. The image hereafter refers to an image corresponding to a frame of a moving image. The image obtaining unit 11 may not obtain an image captured with a camera, but may obtain an image from an external source via a wire or a wireless network, or may obtain an image from a memory, such as a disk drive or a flash memory.

The feature quantity obtaining unit 12 obtains a feature quantity corresponding to an image obtained by the image obtaining unit 11. More specifically, the feature quantity obtaining unit 12 obtains a group of feature quantities corresponding to all the pixels forming the obtained image. The feature quantity obtaining unit 12 may obtain a group of feature quantities corresponding to some of the pixels forming the obtained image, or may obtain a group of feature quantities corresponding to an area of the obtained image. The feature quantity obtaining unit 12 may obtain feature quantities for a single image. Alternatively, the feature quantity obtaining unit 12 may obtain feature quantities for a moving image (an image including a plurality of continuous frames), which will be described below.

The identifier unit 13 includes a plurality of one-class identifiers. The identifier unit 13 outputs an error (hereafter referred to as an identification error) between an input image and a target class for identification performed by each identifier. The identifies included in the identifier unit 13 are preferably one-class identifiers, which each output an error from a single class. For example, each identifier may be a one-class support vector machine (SVM)
(http://rvlasveld.github.io/blog/2013/07/12/introduction-to-one-class-support-vector-m achines/) or a support vector data description (SVDD) machine. The method for learning each identifier and the method for using an identification error will be described below.

The abnormal event determination unit 14 determines whether an input image contains an abnormal event based on identification errors output from the identifier unit 13 (or more specifically, a plurality of identification errors output from the different identifies). Abnormal events refer to events that do not occur in normal circumstances. Typical examples of abnormal events include fainting or falling of persons, traffic accidents, and intrusions into guarded areas, or may be other events. For example, abnormal events may include defects detected on manufacturing lines.

The output unit 15 provides information to the user. The output unit 15 typically includes a liquid crystal display and its controller. The output unit 15 may not be a display and may be any other device that can transmit information to the user. For example, the output device 15 may be a device that outputs sound, or may be a communicator that transmits e-mail messages or instant messages.

The capabilities of the image obtaining unit 11, the feature quantity obtaining unit 12, the identifier unit 13, and the abnormal event determination unit 14 are implemented by a processing unit, such as a central processing unit (CPU), that executes a control program. Alternatively, these functional units may be implemented by an application specific integrated circuit (ASIC), or by a combination of the CPU and the ASIC.

### Obtaining Feature Quantities

The processing performed by the image processing apparatus 10 of the present embodiment includes two phases: learning identifies using an input image; and determining the occurrence of an abnormality in the input image using the learned identifiers. These phases both involve obtaining feature quantities corresponding to an input image, and performing processing using the obtained feature quantities. A method for obtaining the feature quantities from an input image will first be described. Although several methods are available for obtaining the feature quantities, this embodiment uses a 3D-LBP.

A local binary pattern (LBP), which forms the basis of a 3D-LBP, will now be described.

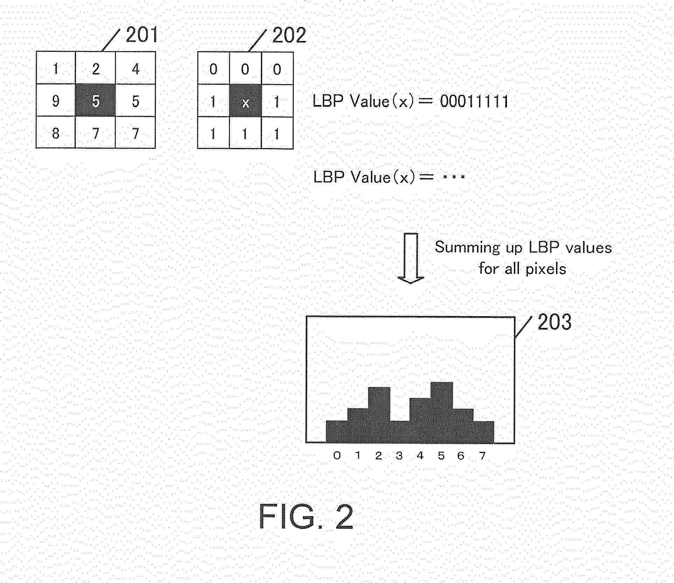

The LBP is a binary pattern expressing the relationship between a target pixel and pixels neighboring the target pixel. Fig. 2 is a diagram describing a method for calculating a feature quantity using an LBP. An area 201 extracted from an input image has a size of 3×3 pixels. The area 201 includes a pixel in black at the center as a processing target pixel (target pixel).

In this example, a pattern to be generated indicates whether the eight pixels neighboring the target pixel each have a higher luminance than the target pixel. More specifically, the pixel having a luminance value less than 5 indicates 0, whereas the pixel having a luminance value of 5 or higher indicates 1 in the resulting pattern 202. The resultant binary values are arranged in order from the top left to generate an eight-bit value (LBP value).

The LBP values calculated for the different pixels are then summed up for every bit to generate a histogram. The resulting histogram 203 (in other words, an eight-dimensional vector) represents the feature quantity for the entire image.

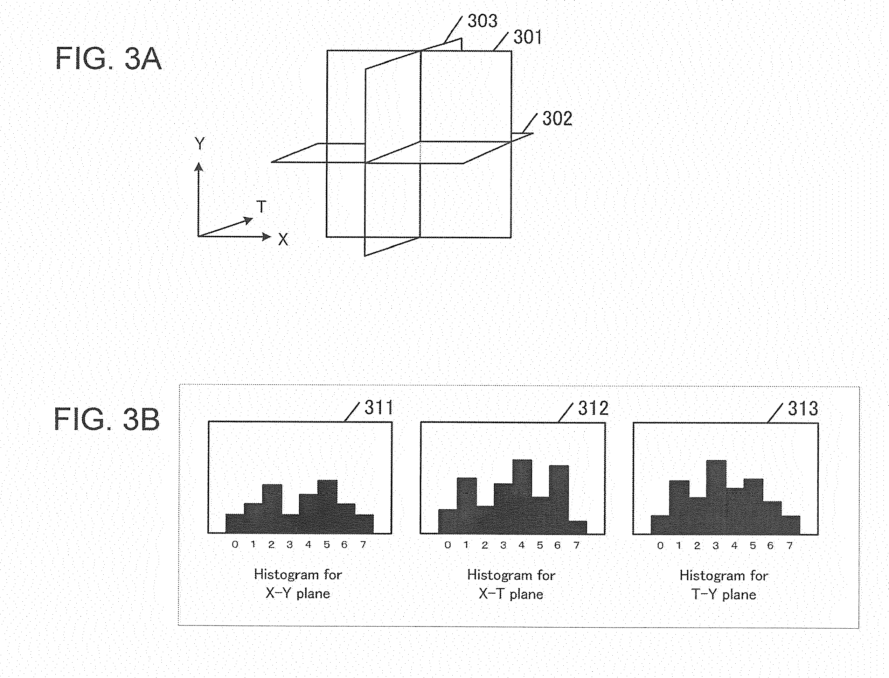

The feature quantity described above corresponds to a single still image. A 3D-LBP is a pattern obtained through temporal extension of an LBP. The 3D-LBP represents a feature quantity additionally representing motions between different frames of a moving image. This will be described with reference to Figs. 3A and 3B. In Fig. 3A, X-axis indicates the lateral direction of the image, Y-axis indicates the longitudinal direction of the image, and T-axis indicates the temporal axis direction.

In Fig. 3A, a plane 301 represents an image corresponding to a frame of a moving image at a predetermined time. More specifically, a histogram 311 for the plane 301 is equivalent to the histogram 203 expressed using the LBP described above.

A plane 302 is defined by pixels having the same coordinate in Y-direction arranged in the temporal axis direction. The plane 302 differs from the plane 301 only in its axis, and is generated using the same method as described above for obtaining the LBP value and generating the histogram. A histogram 312 for the plane 302 is represented by an eight-dimensional vector, in the same manner as the histogram 311.

A plane 303 is defined by pixels having the same coordinate in X-direction arranged in the temporal axis direction. The plane 303 differs from the plane 301 only in its axis, and is generated using the same method as described above for obtaining the LBP value and generating the histogram. A histogram 313 for the plane 303 is represented by an eight-dimensional vector, in the same manner as the histogram 311.

As described above, the 3D-LBP indicates a single feature quantity by defining three planes using the temporal axis, generating three histograms, and combining the histograms together. Each histogram is represented by an eight-dimensional vector. The feature quantity indicated by the resulting 3D-LBP is represented by a 24-dimensional vector. As a result, the 24-dimensional vector indicates the feature quantity corresponding to the three planes 301 to 303.

Although the above example uses a single feature quantity calculated for three planes, another example may use a plurality of feature quantities calculated for planes located at sequentially shifted positions. In this case, a group of 24-dimensional vectors are used for one frame.

Although the above example describes the method for calculating the feature quantity using a 3D-LBP, the feature quantity may be calculated with any other methods. For example, the feature quantity may be calculated by using an index value indicating motions of an object between frames using a vector (optical flow), or the feature quantity may be calculated for each frame, and a group of feature quantities corresponding to a plurality of frames may be used. The feature quantity corresponding to a still image may be obtained by a technique known in the art, such as Scale-Invariant Feature Transform (SIFT), Speed-Up Robust Features (SURF), or Histogram of Oriented Gradient (HOG).

### Learning Identifiers

A method for learning identifiers included in the identifier unit 13 will now be described.

As described above, the identifiers are one-class identifiers in this embodiment. A one-class identifier can determine the degree of matching for one class.

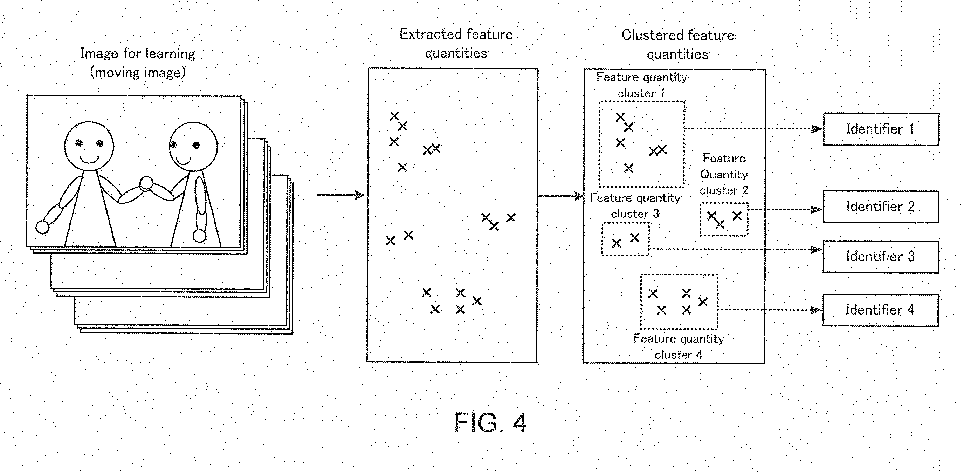

Fig. 4 is a diagram describing a learning process in which identifiers are learned. In the present embodiment, the identifier unit 13 implements the steps described below to perform the learning process.

### (1) Obtaining an image for learning and calculating a feature quantity

The identifier unit 13 first obtains an image for learning, which contains no abnormal events or which is expected to contain abnormal events constituting a small proportion of the image, and calculates a feature quantity for the obtained image. In the present embodiment, the feature quantity is obtained using a 3D-LBP. Thus, the image for learning is a frame image obtained from a moving image. In the present embodiment, images are obtained from a plurality of moving images, and feature quantities are obtained for the obtained images. Through this step, a plurality of feature quantities each expressed by a 24-dimensional vector are obtained for each moving image.

### (2) Classifying the obtained feature quantities

The identifier unit 13 generates a plurality of clusters corresponding to the obtained plurality of feature quantities, and classifies the feature quantities into different clusters. This clustering uses any predetermined clustering method, such as K-means or spectral clustering. Alternatively, the clustering method may not be used, but N pairs of samples may be randomly selected from the obtained feature quantities, and the selected samples may be classified into N clusters.

The clustering may not be automatic, but the number of clusters or the types of clusters may be preset. When, for example, the image is known to include a plurality of patterns of normal events, the clusters corresponding to such patterns may be predefined, and the patterns may be classified into the corresponding clusters.

In the example of Fig. 4, the feature quantities extracted from the image for learning are classified into four feature quantity clusters (hereafter, simply "clusters").

### (3) Learning Identifiers using the classified feature quantities

The feature quantities classified into the clusters are then used to learn identifiers corresponding to the clusters. This example uses four clusters corresponding to the obtained feature quantities, and thus uses four identifiers to be learned.

Each of the identifiers learned as described above can identify an error between input data and its corresponding cluster. For example, when an event A is associated with a feature quantity cluster 1, an identifier 1 can output a numerical value indicating the degree of similarity between the input data and the event A. Although automatic clustering may fail to associate some specific events with clusters, each identifier can at least determine the similarity of each event occurring in the image that has been used for learning.

### Determining Abnormal Events

A method for determining whether the obtained image includes an abnormal event using the learned identifiers will now be described.

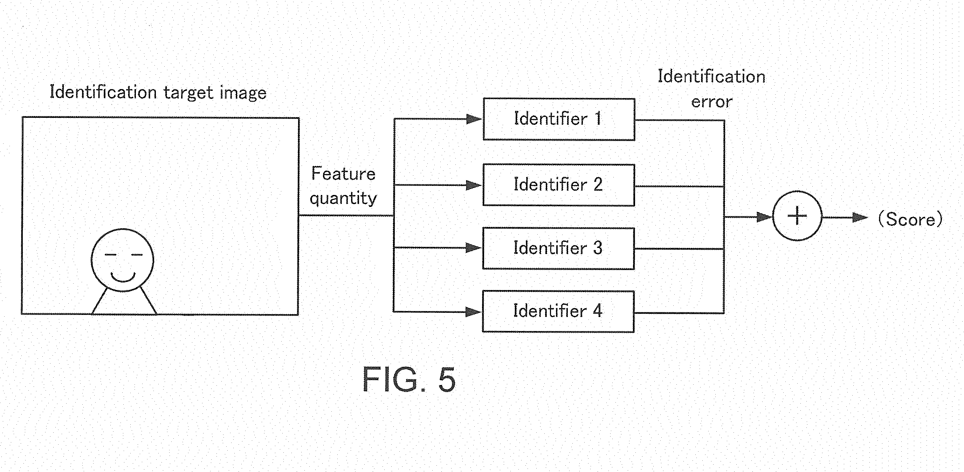

Fig. 5 is a diagram describing a process for determining the occurrence of an abnormal event. The image processing apparatus of the present embodiment determines the occurrence of an abnormal event by implementing the steps described below.

### (1) Obtaining an input image (an identification target image) and calculating its feature quantity

The identification target image is an image for which the occurrence of an abnormal event is unknown. In this example, the feature quantity corresponding to the image is obtained with the same method as used for the learning process.

### (2) Inputting the obtained feature quantity into each identifier and obtaining an identification error

The obtained feature quantity is input into each of the plurality of identifiers. As a result, an identification error between the input image and the cluster corresponding to each identifier can be obtained. In this example, an identifier i outputs an identification error Ei.

### (3) Determining the occurrence of an abnormal event based on a plurality of identification errors

A large identification error output from the identifier indicates a high likelihood of the occurrence of an event different from the events generated in the learning process. As a result, the occurrence of an abnormal event can be determined based on the identification error output from each identifier.

More specifically, when the sum of the identification errors Ei exceeds a threshold T, or when ∑Ei ≥ T, the image processing apparatus determines that an abnormal event has occurred. The large sum of the identification errors output from the identifier indicates that the obtained feature quantity deviates greatly from any of the clusters. More specifically, the large sum of the identification errors indicates a high likelihood that an event different from the event generated in the learning process has occurred.

In this example, the identification errors output from each identifier are summed up without any processing. Alternatively, the identification errors may be weighted before the errors are summed up. For example, the identification errors Ei output from the identifier i may be weighted by using a weighting value Wi. The sum of the weighted identification errors exceeding the threshold T, or ∑Ei Wi ≥ T, may determine that an abnormal event has occurred.

A method for weighting an identification error will now be described.

The value used for weighting is preferably determined based on the reliability of the corresponding cluster. For example, the weighting value may be smaller for the cluster including a smaller number of samples, whereas the weighting value may be larger for the cluster including a larger number of samples. The weighting value is set in this manner because the cluster including a fewer samples is considered unsuitable for determining the occurrence of an abnormal event.

Alternatively, the weighting value may be smaller for the cluster including samples with a larger variance, whereas the weighting value may be larger for the cluster including samples with a smaller variance. The weighting value is set in this manner because the cluster is associated less closely to a specific event and has a low reliability when the variance is large.

### Flowcharts

The flowcharts showing the processes enabling the above capabilities will now be described.

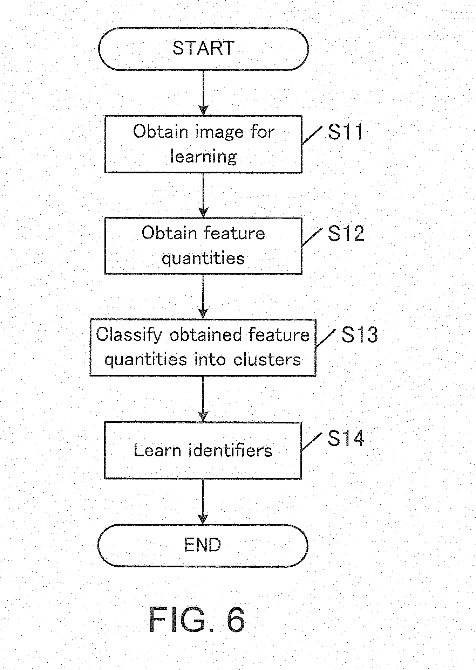

Fig. 6 is a flowchart showing a process for learning identifiers performed by the image processing apparatus 10 of the present embodiment. This learning process starts in response to an operation performed by the user (for example, an operation instructing to start the learning process).

In step S11, the image obtaining unit 11 obtains an image for learning. Although the image is captured with a camera (not shown) in the present embodiment, the image may be obtained through communication, or may be obtained from a memory. The feature quantity expressed using a 3D-LBP includes images corresponding to several frames preceding and following the current frame. In this case, images corresponding to the necessary number of frames may be obtained in advance.

In step S12, the feature quantity obtaining unit 12 obtains feature quantities corresponding to the obtained image. Although the feature quantities are obtained using a 3D-LBP in the present embodiment, the feature quantities may be obtained with any other methods as described above. The feature quantities may be obtained for all the pixels forming the image, or may be obtained for some of the pixels or an area of the image that contains the typical features of the image.

In step S13, the feature quantity obtaining unit 12 clusters the feature quantities obtained in step S12. The method for clustering may be any method as described above.

This process generates the feature quantities corresponding to the image classified into the plurality of clusters.

In step S14, the identifier unit 13 learns the identifiers corresponding to different clusters by using the feature quantities classified into the corresponding clusters.

The process shown in Fig. 6 may be performed repeatedly until a sufficient amount of data necessary for the learning process is obtained. Alternatively, the process may start in response to a command other than the operation performed by the user. For example, the process may start automatically every time when a predetermined time elapses from the previous implementation of this process. Additionally, the user may perform an operation to start another learning process in which one or more sets of data are additionally read and processed for learning.

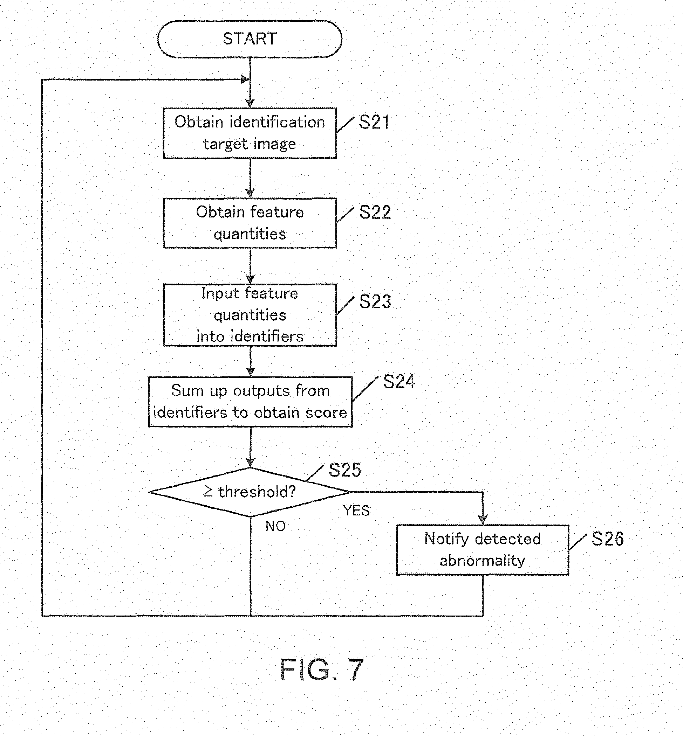

Fig. 7 is a flowchart showing a process for determining the occurrence of an abnormal event performed by the image processing apparatus 10 of the present embodiment. This process is performed repeatedly during operation of the image processing apparatus 10 when the learning process of identifies has been completed.

The processing in steps S21 and S22 is the same as the processing in steps S11 and S12 except that the image to be obtained is a determination target image, and thus will not be described in detail.

In step S23, the identifier unit 13 inputs the feature quantities obtained from the feature quantity obtaining unit 12 into the corresponding identifiers.

In step S24, the identifier unit 13 obtains an identification error output from each identifier, and calculates the sum of all the received identification errors to obtain the score.

In step S25, the abnormal event determination unit 14 determines whether the calculated score is equal to or exceeds the threshold. When the score is equal to or exceeds the threshold, the abnormal event determination unit 14 determines that an abnormal event has occurred, and moves the processing to step S26. When the score is less than the threshold, the abnormal event determination unit 14 returns the processing to step S21, and repeats the process after waiting for a predetermined time.

In step S26, the abnormal event determination unit 14 notifies the user that an abnormal event has been detected via the output unit 15. When the output unit 15 is a display, the notification may be performed by displaying the information on the screen. When the output unit 15 can output sound or communicate data, the notification may be performed with sound or electronic data (instant messages or e-mail).

As described above, the image processing apparatus of the present embodiment obtains the feature quantities corresponding to the image, clusters the feature quantities, and learns the identifiers corresponding to the clusters, and then determines whether an abnormal event has occurred based on identification errors. Instead of learning predefined normal and abnormal scenes, the image processing apparatus learns a plurality of scenes most of which are expected to include events that can occur in normal circumstances, and then determines a deviation from the learned scenes to determine whether an abnormal event has occurred. This eliminates the conventional need to prepare many sets of data corresponding to abnormal events. The image processing apparatus of the present embodiment also improves the identification accuracy when processing scenes with a plurality of types of normal events that are difficult to predefine.

### Modifications

The above embodiment is a mere example. The invention can be modified freely without departing from the spirit and scope of the invention.

For example, although the identifiers are one-class identifiers in the present embodiment, the identifiers may be, for example, binary identifiers that perform binary classification.

The feature quantity obtaining unit 12 may not obtain the feature quantity corresponding to the entire image, but may obtain a group of feature quantities corresponding to a plurality of areas in the image. For example, the image may be divided into square areas each having a size of 16×16 pixels, and a group of feature quantities may be obtained for each area. The feature quantity may be obtained for each group of pixels having similar features, or in other words, in units of superpixels.

Although the feature quantities are obtained with the single method (3D-LPB) in the embodiment, a plurality of sets of feature quantities may be obtained with a plurality of methods, and the obtained sets of feature quantities may be combined into the entire feature quantity.

The threshold T used for determining the occurrence of an abnormal event may be a fixed value, or may be a value generated by calibrating the value after an abnormal event is actually generated. More specifically, the threshold may be adjusted to a value that allows correct detection of an abnormal event in accordance with an output from the apparatus.

Although the above embodiment does not define the correspondence between the cluster and scenes to be classified into the cluster, a cluster known to correspond to predetermined scenes may be used to classify these scenes.

Although the above embodiment uses a moving image as a target image for which the occurrence of an abnormal event is determined, the target data may be still image data or sound data. The target data may be any data for which its feature quantity can be calculated.

Although the data for learning and the data for identifying are input separately in the above embodiment, the data for learning used in the learning process may be input again and used to determine the occurrence of an abnormal event.

### LIST OF REFERENCE NUMERALS

- 10: Image processing apparatus
- 11: Image obtaining unit
- 12: Feature quantity obtaining unit
- 13: Identifier unit
- 14: Abnormal event determination unit
- 15: Output unit

## Claims

1. An event detection apparatus, comprising:
a first data obtaining unit configured to obtain first data;
a plurality of identifiers;
a feature quantity classifying unit configured to obtain a feature quantity corresponding to the first data, generate a plurality of clusters for classifying the obtained feature quantity, and classify the feature quantity into a corresponding one of the clusters;
a learning unit configured to learn the plurality of identifiers using feature quantities classified into the clusters;
a second data obtaining unit configured to obtain second data;
an identifier unit configured to input a feature quantity corresponding to the second data into the plurality of learned identifiers, and receive an identification result from each identifier; and
a determination unit configured to determine whether the second data includes an identification target event based on the obtained identification result.

2. The event detection apparatus according to claim 1, wherein
each identifier is a one-class identifier, and
the determination unit obtains a sum of identification errors obtained from the plurality of identifiers as a score, and determines whether the second data includes the target event based on the score.

3. The event detection apparatus according to claim 2, wherein
the determination unit weights the identification errors obtained from the identifiers and obtains the score using the weighted identification errors.

4. The event detection apparatus according to claim 3, wherein
the determination unit weights the identification error output from each identifier using a greater weighting value for the identifier for which the corresponding cluster includes a larger number of samples.

5. The event detection apparatus according to claim 3, wherein
the determination unit weights the error output from each identifier using a greater weighting value for the identifier for which the corresponding cluster includes samples having a smaller variance.

6. The event detection apparatus according to one of claims 1 to 5, wherein
the first data and the second data are image data.

7. The event detection apparatus according to claim 6, wherein
the feature quantity is a three-dimensional local binary pattern.

8. An event detection method implemented by an event detection apparatus for determining whether obtained data includes an identification target event, the method comprising:
obtaining first data;
obtaining a feature quantity corresponding to the first data, generating a plurality of clusters for classifying the obtained feature quantity, and classifying the feature quantity into a corresponding one of the clusters;
learning a plurality of identifiers corresponding to the clusters using feature quantities classified into the clusters;
obtaining second data;
inputting a feature quantity corresponding to the second data into the plurality of learned identifiers, and receiving an identification result from each of the identifiers; and
determining whether the second data includes an identification target event based on the obtained identification result.

9. An event detection program implemented by an event detection apparatus for determining whether obtained data includes an identification target event, the program enabling the event detection apparatus to implement:
obtaining first data;
obtaining a feature quantity corresponding to the first data, generating a plurality of clusters for classifying the obtained feature quantity, and classifying the feature quantity into a corresponding one of the clusters;
learning a plurality of identifiers corresponding to the clusters by using the classified feature quantity;
obtaining second data;
inputting a feature quantity corresponding to the second data into the plurality of learned identifiers, and receiving an identification result from each of the identifiers; and
determining whether the second data includes an identification target event based on the obtained identification result.

10. A storage medium storing the event detection program according to claim 9.

11. An event detection apparatus that determines whether obtained data includes an identification target event, the event detection apparatus comprising:
a data obtaining unit configured to obtain data;
a plurality of identifiers;
an identifier unit configured to input a feature quantity corresponding to the obtained data into the plurality of identifiers, and receive an identification result from each identifier; and
a determination unit configured to determine whether the obtained data includes an identification target event based on the obtained identification result,
wherein the identifiers are identifiers learned in correspondence with a plurality of clusters using feature quantities obtained from data for learning and classified into the plurality of clusters.
